# EUROPEAN PATENT SPECIFICATION

(11) **EP 3 567 374 B1**
(45) Date of publication and mention of the grant of the patent: **28.06.2023**
(21) Application number: 19173587.7
(22) Date of filing: 09.05.2019
(51) Int. Cl.: G01P 5/24, G01P 5/14, G01P 5/16, G01P 13/02

(54) **MULTI-FUNCTION PROBE AIR DATA SYSTEM ARCHITECTURE INCLUDING ACOUSTIC SENSORS**
MULTIFUNKTIONSSONDEN-LUFTDATENSYSTEMARCHITEKTUR MIT AKUSTISCHEN SENSOREN
ARCHITECTURE DE SYSTÈME DE DONNÉES D'AIR DE SONDE MULTIFONCTION COMPRENANT DES CAPTEURS ACOUSTIQUES

(30) Priority: 09.05.2018 US 201815975355
(43) Date of publication of application: 13.11.2019
(73) Proprietor: ROSEMOUNT AEROSPACE INC., Burnsville, MN 55306-4898 (US)
(72) Inventor: SLY, Jaime, Savage, MN Minnesota 55378 (US); NASLUND, Brian Brent, Chanhassen, MN Minnesota 55317 (US)
(74) Representative: Dehns

(56) References cited:
- EP-A1- 3 223 020
- FR-A1- 2 974 908
- US-A- 3 379 060
- US-A1- 2005 131 591
- US-B1- 6 668 640

## Description

### BACKGROUND

The present disclosure relates generally to air data systems, and more particularly to air data systems utilizing multi-function probes and acoustic sensors for generating aircraft air data parameter outputs.

Modern aircraft often incorporate air data systems that calculate air data outputs based on measured parameters collected from various sensors positioned about the aircraft. For instance, many air data systems utilize air data probes that measure pneumatic pressure of airflow about the aircraft exterior to generate aircraft air data outputs, such as angle of attack (i.e., an angle between the oncoming airflow or relative wind and a reference line of the aircraft, such as a chord of a wing of the aircraft), calibrated airspeed, Mach number, altitude, or other air data parameters. During sideslip of the aircraft (i.e., a nonzero angle between the direction of travel of the aircraft and the aircraft centerline extending through the nose of the aircraft), compensation of various local (to the probe) parameters or signals, such as angle of attack and static pressure, is advantageous for accurate determination of aircraft air data parameters, such as aircraft angle of attack or aircraft pressure altitude (determined from static pressure measurements). The air data probes may also be paired with temperature sensors in order to determine static air temperature, total air temperature, and true airspeed.

Increased accuracy achieved through sideslip compensation is particularly relevant in modern aircraft employing advanced control mechanisms that operate in the National Airspace System, as well as to accommodate fly-by-wire or other control systems that may benefit from increased accuracy achieved through sideslip compensation. To this end, many air data systems utilize multiple pneumatic air data probes positioned at opposite sides of the aircraft and cross-coupled to exchange pressure information. Static pressure sensed by an opposite side probe is used to compensate air data parameter outputs for a sideslip condition. In certain air data systems, cross-coupled probes are pneumatically connected so that the pressure signals are averaged between probes. Other air data systems utilize air data probes that are not pneumatically connected, but rather include processors and other electronic components for interchanging electrical signals representative of the pressure information (and other information) between probes. Such probes, having integrated electronics, are often referred to as electronic multi-function probes (MFPs). MFPs reduce the need for pneumatic couplings between the probes, thereby reducing space, cost, and maintenance associated with the pneumatic couplings.

As aircraft systems such as flight control systems and stall protection systems become more highly integrated, complex, and automated, the integrity of air data information used by these aircraft systems becomes increasingly important. As such, these highly complex systems typically utilize redundant inputs of air data information that are measured by independent sources. The independent sources of air data are often desired to be derived from dissimilar equipment to reduce the risk of common mode errors occurring amongst the separate sources of air data. This redundancy, independence, and dissimilarity of air data outputs is strongly recommended worldwide by certification authorities and is typically required for airworthiness certification of the aircraft.

An air data system is known from FR 2 974 908 A.

### SUMMARY

According to an aspect of the invention, there is provided a system for an aircraft as recited in claim 1.

Further, optional, features are recited in each of claims 2 to 8.

According to an aspect of the invention, there is provided a method as recited in claim 9.

### BRIEF DESCRIPTION OF THE DRAWINGS

FIG. 1 is a schematic block diagram illustrating an example embodiment of an acoustic sensor system that forms an aircraft air data system.
FIGS. 2A and 2B are schematic diagrams illustrating an aircraft air data architecture according to an embodiment.
FIG. 3 is a schematic diagram illustrating another embodiment of an aircraft air data architecture.

### DETAILED DESCRIPTION

As described herein, an example air data system architecture includes two dual-channel multi-function probes (MFPs) and an acoustic sensor system to provide three independent sets of aircraft air data parameter outputs. A first electronics channel of the first MFP is electrically coupled to receive static pressure data from a first electronics channel of the second MFP to form a first air data system providing first aircraft air data parameter outputs. A second electronics channel of the second MFP is electrically coupled to receive static pressure data from a second electronics channel of the first MFP to form a second air data system providing second aircraft air data parameter outputs.

The acoustic sensor system may form a third air data system providing third aircraft air data parameter outputs. The acoustic sensor system may include multiple acoustic sensors positioned on the aircraft exterior in separate geometric planes. Each acoustic sensor is configured to emit acoustic signals, such as acoustic pulses, for example, into an airflow about the aircraft exterior and to generate the third aircraft air data parameter outputs based on sensed data from microphones positioned to sense the emitted acoustic signals.

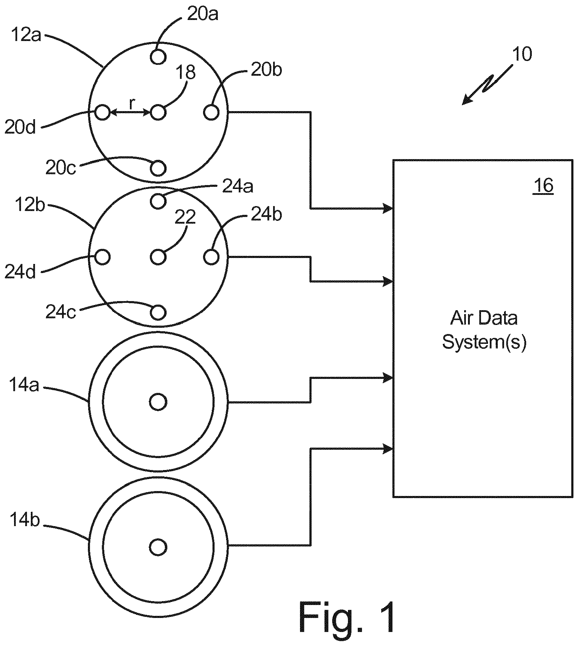

FIG. 1 is a schematic block diagram illustrating an example embodiment of an acoustic sensor system. Acoustic sensor system 10 includes acoustic sensors 12a and 12b, static ports 14a and 14b, and air data system(s) 16. Sensor system 10 can include any combination of sensors 12a and 12b, and static ports 14a and 14b. When including all of sensors 12a and 12b, and static ports 14a and 14b, a full suite of air data parameters is obtainable for an aircraft that includes system 10. For example, acoustic sensor system 10 is capable of determining angle-of-attack (AOA), angle-of-sideslip (AOS), static air temperature (SAT), and static pressure. Acoustic sensor 12a includes emitter 18 and microphones 20a-20d, and acoustic sensor 12b includes emitter 22 and microphones 24a-24d. Air data system(s) 16 may include an air data computer, hosted air data application, or any other system capable of receiving sensed data and generating air data parameters. While illustrated and described as acoustic sensors that include an emitter centered within four microphones, other embodiments of acoustic sensors 12a and 12b may include any configuration capable of emitting and receiving acoustic signals. For example, acoustic sensors 12a and 12b may include fewer or greater than four microphones arranged in any manner to sense acoustic signals from emitters 18 and 22. In other embodiments, one or both of acoustic sensors 12a and 12b may include an array of transducers capable of both emitting and receiving acoustic signals.

An acoustic sensor system implemented on an aircraft may include one or more of acoustic sensors 12a and 12b, and static ports 14a and 14b, in any combination, based upon the needs of the aircraft. For example, an aircraft may include only acoustic sensor 12a, which may be positioned at any point on the exterior of the aircraft. In one embodiment, acoustic sensor 12a may be positioned on the side of the aircraft and emitter 18 may emit acoustic signals into the airflow along the side of the aircraft. Each microphone 20a-20d may be positioned to sense the emitted acoustic signals. In one example embodiments, the acoustic signals may be acoustic pulses emitted at any desired frequency. For example, acoustic sensor 12a may be an ultrasonic acoustic sensor, emitting pulses at greater than 20kHz. In other embodiments, acoustic sensor 12a may be configured to emit pulses in the audible range. In other embodiments, acoustic sensor 12a may be configured to emit a continuous sound wave rather than pulses.

In the example embodiment illustrated in FIG. 1, microphones 20a and 20c are orthogonal to microphones 20b and 20d. The distance (r) between emitter 18 and each microphone 20a-20d is known. The distance between each microphone 20a-20d and emitter 18 may be equal, or may vary for each microphone 20a-20d. For example, the distance (r) between each microphone 20a-20d and emitter 18 may be between 4 and 5 inches. In this embodiment, if acoustic sensor 12a is an ultrasonic sensor configured to emit acoustic pulses at 40kHz, it will take on the order of 200 to 5000 microseconds, depending upon airflow and ambient conditions, for each acoustic pulse to reach each microphone 20a-20d.

Knowing the distance (r) between each microphone 20a-20d and emitter 18, time of flight for the acoustic signals can be determined for each microphone 20a-20d. Using two microphones along the same axis, the speed of sound in the direction of the two microphones can be determined. For example, acoustic sensor 12a may be positioned on the right side of the aircraft. For an aircraft in the u-v-w three-dimensional space (e.g., the u axis extends along the body and through the nose of the aircraft, the v axis extends out through the side of the aircraft, and the w axis extends through the bottom of the aircraft), acoustic sensor 12a is positioned in the u-w geometric plane. Thus, microphones 20a and 20c can be used to obtain a velocity in the w axis direction, and microphones 20b and 20d can be used to obtain a velocity in the u axis direction. These two velocities can be used to form a two-dimensional velocity vector for the u-w plane. Because acoustic sensor 12a is on the side of the aircraft, the two-dimensional velocity vector can be used to determine an AOA for the aircraft.

In another embodiment, acoustic sensor 12a may be positioned on the top or bottom of the aircraft. For example, acoustic sensor 12a may be positioned on the top of the aircraft in the geometric u-v plane. In this embodiment, microphones 20a and 20c can be used to determine a velocity in the u axis direction, and microphones 20b and 20d can be used to determine a velocity in the v axis direction. Because acoustic sensor 12a is on the top of the aircraft, the two-dimensional velocity vector for the u-v plane can be used to determine an AOS for the aircraft.

Acoustic sensor 12a is also capable of providing a static air temperature, regardless of the position on the exterior of the aircraft. Two microphones along the same axis, such as microphones 20a and 20c, may be used to sense the acoustic signals from emitter 18. Microphone 20c may sense the time of flight of the acoustic signals upstream of emitter 18 and microphone 20a may sense the time of flight of the acoustic signals downstream of emitter 18. Knowing the distance between microphones 20a and 20c, the speed of sound may be determined, which can then be used to calculate the air temperature. Thus, an aircraft system that includes only a single acoustic sensor is capable of providing parameter outputs that include a two-dimensional velocity vector and a static air temperature. The two-dimensional velocity vector can be used to determine either AOA or AOS, depending upon the physical location of the acoustic sensor on the aircraft.

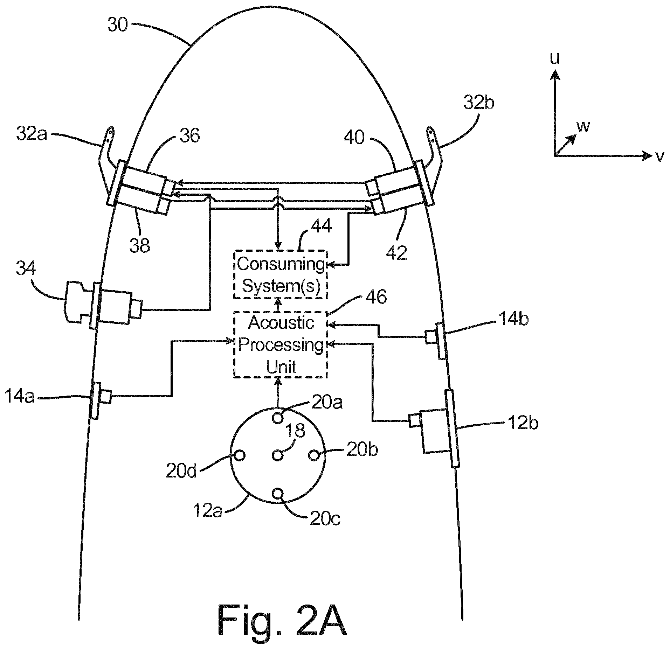

In another embodiment, in addition to the first acoustic sensor 12a, a second acoustic sensor 12b may be positioned on the aircraft in a geometric plane different from acoustic sensor 12a. For example, and as illustrated in FIG. 2A, the first acoustic sensor 12a may be implemented on the top or bottom of the aircraft in the u-v plane, while the second acoustic sensor 12b may be implemented on the side of the aircraft in the u-w plane. Acoustic sensor 12b may operate in a substantially similar manner to acoustic sensor 12a. Acoustic sensor 12a is capable of obtaining the two-dimensional velocity vector in the u-v plane and acoustic sensor 12b is capable of obtaining a two-dimensional velocity vector in the u-w plane. The two two-dimensional velocity vectors from the two respective acoustic sensors 12a and 12b allow the acoustic system to determine both AOA and AOS.

In addition to one or both of acoustic sensors 12a and 12b, one or both of static pressure ports 14a and 14b may be included on the exterior of the aircraft. For example, static pressure port 14a may be positioned on the left side of the aircraft and static pressure port 14b may be positioned on the right side of the aircraft to sense static pressure. Therefore, using acoustic sensors 12a and 12b, and static pressure ports 14a and 14b, air data systems 16 can generate a full suite of aircraft air data parameters. In other embodiments, acoustic sensors 12a and 12b may include integrated static pressure ports, or may be configured to determine static pressure acoustically.

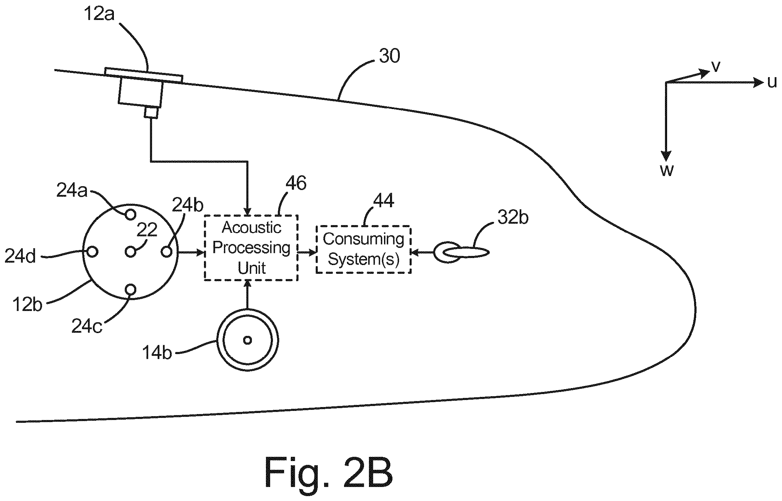

FIGS. 2A and 2B are schematic block diagrams illustrating an example air data system architecture for aircraft 30 that includes acoustic sensors 12a and 12b, static ports 14a and 14b, first MFP 32a, second MFP 32b, and TAT sensor 34. FIG. 2A is a top-down view of aircraft 30 in the u-v plane and FIG. 2B is a side view of aircraft 30 in the u-w plane. FIGS. 2A and 2B will be discussed together. First MFP 32a includes first electronics channel 36 and second electronics channel 38. Second MFP 32b includes first electronics channel 40 and second electronics channel 42. Each of first electronics channel 36 and second electronics channel 42 includes a plurality of pressure sensors and processing circuity for determining air data parameter outputs based on measured pressures of the airflow, as is further described below. Each of second electronics channel 38 and first electronics channel 40 includes a pressure sensor and processing circuitry for determining a static air pressure of the airflow.

TAT sensor 34 includes one or more temperature sensing elements and conditioning circuitry for sensing total air temperature of airflow about the exterior of aircraft 30. Acoustic sensor 12a includes emitter 18 configured to emit acoustic signals into the airflow and microphones 20a-20d are positioned and configured to sense the acoustic signals from emitter 18. Acoustic sensor 12b includes emitter 22 configured to emit acoustic signals into the airflow and microphones 24a-24d are positioned and configured to sense the acoustic signals from emitter 22.

As illustrated in FIG. 2A, first electronics channel 36 of first MFP 32a is electrically coupled with first electronics channel 40 of second MFP 32b to form a first air data system that provides first aircraft air data parameter outputs. Second electronics channel 42 of second MFP 32b is electrically coupled with second electronics channel 38 of first MFP 32a to form a second air data system that provides second aircraft air data parameter outputs. Acoustic sensors 12a and 12b, and static ports 14a and 14b form a third air data system that provides third aircraft air data parameter outputs that are generated based in part upon time of flight measurements of the acoustic signals emitted by emitter 18, as discussed above. TAT sensor 34 is electrically coupled with each of first electronics channel 36 and second electronics channel 42 to provide total air temperature data corresponding to measured total air temperature of the airflow to each of first electronics channel 36 and second electronics channel 42. While illustrated in FIG. 2A as including all of acoustic sensors 12a and 12b, and static ports 14a and 14b, aircraft 30 may include any combination of acoustic sensors 12a and/or 12b, and/or static ports 14a and/or 14b.

Each of first electronics channel 36, second electronics channel 42, and acoustic processing unit 46 are electrically coupled to send (and, in some examples, receive) data with consuming system(s) 44. Consuming systems 44 can include aircraft systems, such as flight management systems, auto-flight control systems, standby instrument systems, display systems, data concentrator units, or other consuming systems of air data parameter outputs. Electrical couplings illustrated in FIGS. 2A and 2B can take the form of direct electrical couplings and/or data bus couplings configured to communicate according to one or more communication protocols, such as the Aeronautical Radio, Incorporated (ARINC) 429 communication protocol, controller area network (CAN) bus communication protocol, military standard 1553 (MIL-STD-1553) communication protocol, Ethernet, or other analog or digital communication protocols.

Acoustic processing unit 46 may be any computer, microprocessor, controller, or other digital circuit configured to calculate air data parameters based on sensed data from acoustic sensors 12a and 12, and static ports 14a and 14b. In the embodiment illustrated in FIGS. 2A and 2B, sensed analog data is provided to acoustic processing unit 46, which converts the analog data into digital data, and calculates the air data parameters using the digital data. The air data parameter outputs from acoustic processing unit 46 are provided to consuming systems 44. In other embodiments, acoustic sensors 12a and 12b, and/or static ports 14a and 14b may include local processing circuitry to supplement and/or eliminate the need for acoustic processing unit 46. For example, acoustic sensor 12a may include a local processor such that data from acoustic sensor 12b and static ports 14a and 14b can be provided to the local processor of acoustic sensor 12a for calculation of the third air data parameter outputs. The local processor of acoustic sensor 12a can then provide the third air data parameter outputs directly to consuming systems 44.

In operation, each of first electronics channel 36 of first MFP 32a and second electronics channel 42 of second MFP 32b measures pressure of an airflow via a plurality of pressure sensing ports, such as a total pressure sensing port and two alpha pressure sensing ports disposed in a barrel portion of first MFP 32a and second MFP 32b, respectively. Second electronics channel 38 of first MFP 32a and first electronics channel 40 of second MFP 32b each measure static pressure of the airflow via a static pressure sensing port disposed in the barrel portion aft of the alpha pressure sensing ports of first MFP 32a and second MFP 32b, respectively. TAT sensor 34 senses total air temperature of the airflow and provides total air temperature data corresponding to the measured total air temperature to each of first electronics channel 36 and second electronics channel 42.

First electronics channel 36 generates local air data parameters (i.e., local to first MFP 32a) based on the measured pressures from the plurality of measured pressure sensors of first MFP 32a and the total air temperature data received from TAT sensor 34. Examples of local air data parameters include, but are not limited to, local AOA, local static pressure, local calibrated airspeed, local Mach number, and local pressure altitude.

Static pressure data corresponding to static pressure measured by first electronics channel 40 of second MFP 32b is communicated to first electronics channel 36 of first MFP 32a. First electronics channel 36 compensates (e.g., modifies) the generated local air data parameters based on functional relationships between static pressure data received from first electronics channel 40 of second MFP 32b and the generated local air data parameters to produce compensated aircraft air data parameters. For example, first electronics channel 36 can store one or more functional mappings that relate local air data parameter values to aircraft air data parameter values as a function of static pressure data received from first electronics channel 40 of second MFP 32b. Functional mappings can take the form of one or more mathematical relationships, one or more data lookup tables, or other functional mappings. First electronics channel 36 can compensate the generated local air data parameters according to the functional mappings to generate compensated aircraft air data parameter values that are provided to consuming systems 44.

In other examples, the one or more functional mappings can relate local air data parameters to aircraft air data parameter values as a function of aircraft AOS. In such examples, first electronics channel 36 can determine an aircraft AOS as a function of local total pressure, local static pressure, and local impact pressure (determined from measured pressures of first MFP 32a) as well as static pressure data received from first electronics channel 40 of second MFP 32b. First electronics channel 36 can compensate the generated local air data parameter values based on the determined aircraft AOS according to the functional mappings to generate compensated aircraft air data parameter outputs that are provided to consuming systems 44. Aircraft air data parameter outputs can include, e.g., aircraft static pressure, aircraft calculated airspeed, aircraft true airspeed, aircraft Mach number, aircraft pressure altitude, aircraft AOA, aircraft AOS, or other aircraft air data parameters outputs.

Accordingly, first electronics channel 36 of first MFP 32a that is electrically coupled with first electronics channel 40 of second MFP 32b forms a first air data system that provides first aircraft air data parameter outputs to consuming systems 44. Second electronics channel 42 of second MFP 32b that is electrically coupled with second electronics channel 38 of first MFP 32a forms a second air data system that provides second aircraft air data parameter outputs to consuming systems 44. That is, second electronics channel 42 generates local air data parameters (i.e., local to second MFP 32b) based on measured pressures from the plurality of measured pressure sensors of second MFP 32b and the total air temperature data received from TAT sensor 34. Static pressure data corresponding to static pressure measured by second electronics channel 38 of first MFP 32a is communicated to second electronics channel 42 of second MFP 32b. Second electronics channel 42 compensates (e.g., modifies) the generated local air data parameters based on functional relationships between static pressure data received from second electronics channel 38 of first MFP 32a (or, in certain examples, aircraft angle of sideslip) and the generated local air data parameters to produce compensated aircraft air data parameters. Compensated aircraft air data parameters generated by second electronics channel 42 of second MFP 32b are provided to consuming systems 44.

Acoustic sensors 12a and 12b, and static pressure ports 14a and 14b, as described above, form the third air data system for aircraft 30 that provides third aircraft air data parameters based on sensing of acoustic signals emitted by sensors 12a and 12b. Local flow calibration may be performed for the acoustic system by acoustic processing unit 46, or by other software implemented elsewhere on aircraft 30. The first aircraft air data parameter outputs provided by the first air data system (e.g., formed by first electronics channel 36 and first electronics channel 40), the second aircraft air data parameter outputs provided by the second air data system (e.g., formed by second electronics channel 42 and second electronics channel 38), and the third aircraft air data parameter outputs provided by the third air data system (e.g., formed by acoustic sensors 12a and 12b, and static pressure ports 14a and 14b) can include the same air data parameters. As such, an air data system architecture according to techniques described herein can provide three independent sets of redundant air data parameter outputs for use by, e.g., consuming systems 44.

Consuming systems 44, in some examples, utilize each of the first aircraft air data parameter outputs, the second aircraft air data parameter outputs, and the third aircraft air data parameter outputs as part of a primary aircraft air data set. For instance, one or more of consuming systems 44 (e.g., a flight management system, an auto-flight control system, or any one or more other consuming systems) can utilize each of the first aircraft air data parameter outputs, the second aircraft air data parameter outputs, and the third aircraft air data parameter outputs in a voting scheme to select one or more of the first, second, and/or third air data parameter outputs for active use by consuming systems 44.

In some examples, one or more of consuming systems 44 can identify the presence of a failure condition in one or more of the first air data system, the second air data system, and the third air data system based on a comparison of the first aircraft air data parameter outputs, the second aircraft air data parameter outputs, and the third aircraft air data parameter outputs. For instance, in examples where only two of the first, second, and third aircraft air data parameter outputs agree (e.g., include parameter output values that are within a threshold deviation), consuming systems 44 can identify the presence of a failure condition in the remaining one of the first, second, and third air data systems that provides air data parameter outputs that do not agree (e.g., includes parameter output values that are not within the threshold deviation from the remaining two systems). Consuming systems 44 can refrain from utilizing air data parameter outputs from the identified air data system having the failure condition, thereby increasing integrity of the air data parameter outputs utilized for, e.g., flight control functions of aircraft 30. In addition, consuming systems 44 can, in certain examples, store, annunciate, or otherwise indicate the presence of the failure condition in the identified air data system, thereby facilitating maintenance operations on components of the identified air data system having the failure condition.

In some examples, consuming systems 44 include one or more standby (or backup) instruments or components, such as a standby flight display unit, that are utilized by flight control systems, pilots, or other systems in the event of a failure condition of designated primary air data system components. In certain examples, one or more of the first aircraft air data parameter outputs, the second aircraft air data parameter outputs, and the third aircraft air data parameter outputs can be provided to the standby instruments or components for use by, e.g., a pilot, in the event of degraded operation of designated primary instruments and/or components. For instance, the third aircraft air data parameter outputs provided by the third air data system (e.g., formed by acoustic sensors 12a and 12b, and static ports 14a and 14b) can be provided to the standby instruments or components.

As such, an air data system architecture implementing techniques described herein provides three independent air data systems formed by two dual-channel MFPs (i.e., first MFP 32a and second MFP 32b) and an acoustic sensor system that includes acoustic sensors 12a and 12b and static ports 14a and 14b. Acoustic technology provided by acoustic sensors 12a and 12b used to form the third air data system provides aircraft air data parameter outputs using dissimilar measurements as compared with the pneumatic-based measurements of the MFPs. Accordingly, techniques of this disclosure can help to increase dissimilarity of the air data systems, reducing the impact of common-mode failures of the pneumatic systems (e.g., MFPs 32a and 32b). For example, the acoustic system may be flush or semi-flush to the skin of the aircraft, reducing the impact of icing conditions experienced by the pneumatic systems.

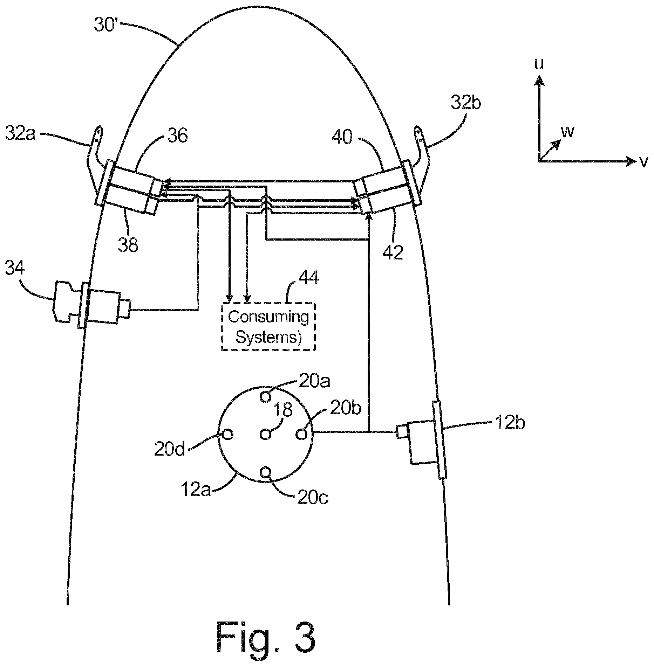

FIG. 3 is a schematic diagram illustrating an example air data system architecture for aircraft not according to the invention, 30' including acoustic sensors 12a and 12b, first MFP 32a, second MFP 32b, and TAT sensor 34. In the example illustrated in FIG. 3, acoustic sensors 12a and 12b do not act as a third air data system, but rather are connected to provide data directly to both the first channel 36 of first MFP 32a, and the second channel 42 of second MFP 32b. In this example, rather than being a third air data system, the sensed data from acoustic sensors 12a and 12b can be used by the first and second air data systems for performance enhancement and fault detection.

For example, aircraft 30' may experience a sideslip condition where the path of travel of aircraft 30' is not in line with the u axis (i.e., the axis extending through the nose of the aircraft is at an angle with the direction of travel of the aircraft). In operation, as air flows over the exterior of aircraft 30', first MFP 32a and second MFP 32b generate local air data parameters (i.e., corresponding to the local conditions of the respective one of first MFP 32a and second MFP 32b) based on sensed pressure data.

In a sideslip condition, first MFP 32a experiences different flow conditions than those experienced by second MFP 32b. For instance, in the sideslip condition in which the nose of aircraft 30' is pointing left of the direction of flight, second MFP 32b experiences airflow having higher pressure conditions than those experienced by first MFP 32a due to the acceleration of the airflow about the aircraft exterior prior to reaching first MFP 32a. Accordingly, the first electronics channel of first MFP 32a is electrically coupled with the first electronics channel of second MFP 32b to receive static pressure data corresponding to static pressure sensed by second MFP 32b via the static pressure port pneumatically connected to a pressure sensor of the first electronics channel of second MFP 32b.

The first electronics channel of first MFP 32a determines an AOS of aircraft 30' as a function of the received static pressure data and compensates the determined local air data parameters based on the AOS to provide the first aircraft air data parameter outputs. Similarly, the second electronics channel of second MFP 32b is electrically coupled with the second electronics channel of first MFP 32a to receive static pressure data corresponding to static pressure sensed by first MFP 32a via the static pressure port pneumatically connected to a pressure sensor of the second electronics channel of first MFP 32a. The second electronics channel of second MFP 32b determines an AOS of aircraft 30' as a function of the received static pressure data and compensates the determined local air data parameters based on the AOS to provide second aircraft air data parameter outputs.

In the event that either MFP 32a or MFP 32b becomes unavailable for any reason, the remaining working MFP can use sensed data from acoustic sensors 12a and 12b to perform compensation otherwise performed using the cross-side probe. This way, rather than acting as a third air data system, acoustic sensors 12a and 12b may be used to provide redundant data and fault accommodation for the first and second air data systems.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A system for an aircraft, the system comprising:
an aircraft (30) ;
a first multi-function probe (MFP) configured to sense at least one first pressure of airflow about an exterior of the aircraft, the first MFP (32a) having a first electronics channel (36) and a second electronics channel (38);
a second MFP (32b) configured to sense at least one second pressure of airflow about the exterior of the aircraft, the second MFP having a first electronics channel (40) and a second electronics channel (42), the first electronics channel of the second MFP electrically coupled with the first electronics channel of the first MFP to form a first air data system providing first aircraft air data parameter outputs, the second electronics channel of the second MFP electrically coupled with the second electronics channel of the first MFP to form a second air data system providing second aircraft air data parameter outputs;
an acoustic sensor system (10) that includes a first emitter (18) configured to emit first acoustic signals into the airflow about the exterior of the aircraft and at least two microphones (20a-20d) that are configured to sense the first acoustic signals as first sensed data and are positioned on the exterior of the aircraft in a plane defined by an axis u and an axis v or in a plane defined by the axis u and an axis w, wherein axis u extends along a body of the aircraft and through the nose of the aircraft, the axis v extends out through a side of the aircraft, and the axis w extends through the bottom of the aircraft such that the axes u, v and w define a three-dimensional space;
the acoustic sensor system further including first and second static pressure ports (14a, 14b) configured to sense a third pressure of airflow about an exterior of the aircraft, the system further comprising an acoustic processing unit (16, 46) configured to receive the sensed data from the acoustic sensor system to form a third air data system and generate third air data parameter outputs based on the sensed data from the acoustic sensor system; and
at least one consuming system (44), wherein the at least one consuming system is configured to receive the first air data parameter outputs, the second air data parameter outputs, and the third air data parameter outputs and the at least one consuming system is further configured to identify a failure condition in one or more of the first air data system, second air data system, and third air data system based on a comparison of the first air data parameter outputs, the second air data parameter outputs, and the third air data parameter outputs and to use each of the first air data parameter outputs, the second air data parameter outputs, and the third air data parameter outputs in a voting scheme to select one or more of first air data parameter outputs, the second air data parameter outputs, and the third air data parameter outputs for active use by the at least one consuming system and the at least one consuming system is further configured to provide one or more of the first air data parameter outputs, the second air data parameter outputs, and the third air data parameter outputs to at least one standby instrument or component that is used in event of a failure condition or degraded operation of a designated primary instrument or component.

2. The system of claim 1, wherein the first sensed data is provided to the first air data system and the second air data system to supplement the first aircraft air data parameter outputs and the second aircraft air data parameter outputs.

3. The system of claim 1 or claim 2, wherein the acoustic sensor system (10) further includes a second emitter configured to emit second acoustic signals into the airflow about the exterior of the aircraft and is configured to sense the second acoustic signals as second sensed data, wherein the first emitter and the second emitter are positioned in different geometric planes such that the acoustic sensor system is configured to use one of the first sensed data and second sensed data to calculate a two-dimensional velocity vector that can be used to determine an angle of attack for the aircraft and to use the other of the first sensed data and second sensed data to calculate a two-dimensional velocity vector that can be used to determine an angle of sideslip for the aircraft, wherein one of the first emitter and second emitter is positioned in a plane defined by the axis (axis u) extending along the body of the aircraft (30) and through the nose of the aircraft and an axis (axis v) extending out through a side of the aircraft, wherein axis (axis u) extending along the body of the aircraft and through the nose of the aircraft and axis (axis v) extending out through a side of the aircraft are orthogonal to each other, and the other of the first and second emitter is positioned in a plane defined by the axis (axis u) extending along the body of the aircraft and through the nose of the aircraft and the axis (axis w) extending through the bottom of the aircraft, wherein axis (axis u) extending along the body of the aircraft and through the nose of the aircraft and axis (axis w) extending through the bottom of the aircraft are orthogonal to each other.

4. The system of claim 3, wherein the acoustic sensor system (10) further comprises:
a first set of at least four microphones configured to sense the first acoustic signals as first sensed data, and
a second set of at least four microphones configured to sense the second acoustic signals as second sensed data, wherein
at least two of the at least four microphones configured to sense the first acoustic signals are positioned along a first axis and at least two of the at least four microphones configured to sense the first acoustic signals are positioned along a second axis orthogonal to the first axis and
at least two of the at least four microphones configured to sense the second acoustic signals are positioned along a first axis and at least two of the at least four microphones configured to sense the first acoustic signals are positioned along a second axis orthogonal to the first axis.

5. The system of claim 3 or claim 4, wherein the acoustic processing unit (16, 46)is configured to calculate one or more of angle of sideslip, angle of attack, an airspeed, and an air temperature for the aircraft based on the first and second sensed data.

6. The system of any preceding claim, wherein each of the first aircraft air data parameter outputs, the second aircraft air data parameter outputs, and the third aircraft air data parameter outputs comprise a same set of air data parameters.

7. The system of any of claims 1 to 6, wherein:
the first MFP (32a) is positioned at a first side of the aircraft (30);
the second MFP (32b) is positioned at a second side of the aircraft opposite the first side;
the first electronics channel (36) of the first MFP is configured to receive static pressure data received from the first electronics channel (40) of the second MFP; and
the second electronics channel of the second MFP (38) is configured to receive static pressure data received from the second electronics channel (42) of the first MFP.

8. The system of any of claims 1 to 7, further comprising:
a total air temperature sensor (34) electrically coupled with each of the first electronics channel (36) of the first MFP (32a) and the second electronics channel (40) of the second MFP (38) to provide total air temperature measurement data to each of the first electronics channel of the first MFP and the second electronics channel of the second MFP.

9. A method comprising:
generating first aircraft air data parameter outputs from a first electronics channel (36) of a first multi-function probe (MFP) based on pressure of airflow about an aircraft (30) exterior sensed by the first MFP (32a) and static pressure data corresponding to static pressure of the airflow about the aircraft exterior received from a first electronics channel (40) of a second MFP (32b);
generating second aircraft air data parameter outputs from a second electronics channel (42) of the second MFP based on pressure of the airflow about the aircraft exterior sensed by the second MFP and static pressure data corresponding to static pressure of airflow about the aircraft exterior received from a second electronics channel (38) of the first MFP; and
generating third aircraft air data parameter outputs from an acoustic sensor system based on observed acoustic signals emitted by the acoustic sensor system into airflow about the aircraft exterior and sensed by at least two microphones (12a-12d) that are positioned on the exterior of the aircraft in a plane defined by, axis u and an axis v or in a plane defined by the axis u and an axis w, wherein the axis u extends along a body of the aircraft and through the nose of the aircraft, the axis v extends out through a side of the aircraft, and the axis w extends through the bottom of the aircraft such that axes u, v and w define a three-dimensional space, as well as on a third pressure of airflow about an exterior of the aircraft sensed by first and second static pressure ports (14a, 14b); and
providing the first aircraft air data parameter outputs, the second aircraft air data parameter outputs, and the third aircraft air data parameter outputs to at least one consuming system, wherein the at least one consuming system determines a failure condition of one or more of the first MFP, the second MFP, and the acoustic sensor based on a comparison of the first aircraft air data parameter outputs, the second aircraft air data parameter outputs, and the third aircraft air data parameter outputs and the at least one consuming system uses a voting scheme to select one or more of first aircraft air data parameter outputs, the second aircraft air data parameter outputs, and the third air aircraft data parameter outputs for active use by the at least one consuming system, wherein the at least one consuming system provides one or more of the first air data parameter outputs, the second air data parameter outputs, and the third air data parameter outputs to at least one standby instrument or component that is used in event of a failure condition or degraded operation of a designated primary instrument or component.

## Patentansprüche

1. System für ein Luftfahrzeug, wobei das System Folgendes umfasst:
ein Luftfahrzeug (30);
eine erste Multifunktionssonde (MFP), die dazu konfiguriert ist, mindestens einen ersten Druck einer Luftströmung um ein Äußeres des Luftfahrzeugs zu erfassen, wobei die erste MFP (32a) einen ersten Elektronikkanal (36) und einen zweiten Elektronikkanal (38) aufweist;
eine zweite MFP (32b), die dazu konfiguriert ist, mindestens einen zweiten Druck einer Luftströmung um das Äußere des Luftfahrzeugs zu erfassen, wobei die zweite MFP einen ersten Elektronikkanal (40) und einen zweiten Elektronikkanal (42) aufweist, wobei der erste Elektronikkanal der zweiten MFP elektrisch mit dem ersten Elektronikkanal der ersten MFP gekoppelt ist, um ein erstes Luftdatensystem zu bilden, das erste Luftfahrzeugluftdatenparameterausgaben bereitstellt, wobei der zweite Elektronikkanal der zweiten MFP elektrisch mit dem zweiten Elektronikkanal des ersten MFP gekoppelt ist, um ein zweites Luftdatensystem zu bilden, das zweite Luftfahrzeugluftdatenparameterausgaben bereitstellt;
ein akustisches Sensorsystem (10), das einen ersten Emitter (18), der dazu konfiguriert ist, erste akustische Signale in die Luftströmung um das Äußere des Luftfahrzeugs zu emittieren, und mindestens zwei Mikrofone (20a-20d) beinhaltet, die dazu konfiguriert sind, die ersten akustischen Signale als erste erfasste Daten zu erfassen, und an dem Äußeren des Luftfahrzeugs in einer Ebene, die durch eine Achse u und eine Achse v definiert ist, oder in einer Ebene positioniert sind, die durch die Achse u und eine Achse w definiert ist, wobei sich die Achse u entlang eines Rumpfs des Luftfahrzeugs und durch die Nase des Luftfahrzeugs erstreckt, sich die Achse v nach außen durch eine Seite des Luftfahrzeugs erstreckt und sich die Achse w durch den Boden des Luftfahrzeugs erstreckt, sodass die Achsen u, v und w einen dreidimensionalen Raum definieren;
wobei das akustische Sensorsystem ferner einen ersten und einen zweiten Anschluss (14a, 14b) für statischen Druck beinhaltet, die dazu konfiguriert sind, einen dritten Druck einer Luftströmung um eine Außenseite des Luftfahrzeugs zu erfassen, wobei das System ferner eine Akustikverarbeitungseinheit (16, 46) umfasst, die dazu konfiguriert ist, die erfassten Daten von dem akustischen Sensorsystem zu empfangen, um ein drittes Luftdatensystem zu bilden und dritte Luftdatenparameterausgaben basierend auf den erfassten Daten von dem akustischen Sensorsystem zu erzeugen; und
mindestens ein Verbrauchssystem (44), wobei das mindestens eine Verbrauchssystem dazu konfiguriert ist, die ersten Luftdatenparameterausgaben, die zweiten Luftdatenparameterausgaben und die dritten Luftdatenparameterausgaben zu empfangen, und das mindestens eine Verbrauchssystem ferner dazu konfiguriert ist, einen Fehlerzustand in einem oder mehreren des ersten Luftdatensystems, des zweiten Luftdatensystems und des dritten Luftdatensystems basierend auf einem Vergleich der ersten Luftdatenparameterausgaben, der zweiten Luftdatenparameterausgaben und der dritten Luftdatenparameterausgaben zu identifizieren und jede der ersten Luftdatenparameterausgaben, der zweiten Luftdatenparameterausgaben und der dritten Luftdatenparameterausgaben in einem Abstimmungsschema zu verwenden, um eine oder mehrere der ersten Luftdatenparameterausgaben, der zweiten Luftdatenparameterausgaben und der dritten Luftdatenparameterausgaben zur aktiven Verwendung durch das mindestens eine Verbrauchssystem auszuwählen, und das mindestens eine Verbrauchssystem ferner konfiguriert ist, einen oder mehrere der ersten Luftdatenparameterausgaben, der zweiten Luftdatenparameterausgaben und der dritten Luftdatenparameterausgaben für mindestens ein Ersatzinstrument oder eine Ersatzkomponente bereitzustellen, das/die im Falle eines Fehlerzustands oder eines verschlechterten Betriebs eines bestimmten primären Instruments oder einer bestimmten primären Komponente verwendet wird.

2. System nach Anspruch 1, wobei die ersten erfassten Daten für das erste Luftdatensystem und das zweite Luftdatensystem bereitgestellt werden, um die ersten Luftfahrzeugluftdatenparameterausgaben und die zweiten Luftfahrzeugluftdatenparameterausgaben zu ergänzen.

3. System nach Anspruch 1 oder Anspruch 2, wobei das akustische Sensorsystem (10) ferner einen zweiten Emitter beinhaltet, der dazu konfiguriert ist, zweite akustische Signale in die Luftströmung um das Äußere des Luftfahrzeugs zu emittieren, und dazu konfiguriert ist, die zweiten akustischen Signale als zweite erfasste Daten zu erfassen, wobei der erste Emitter und der zweite Emitter in unterschiedlichen geometrischen Ebenen positioniert sind, sodass das akustische Sensorsystem dazu konfiguriert ist, eines von den ersten erfassten Daten und den zweiten erfassten Daten zu verwenden, um einen zweidimensionalen Geschwindigkeitsvektor zu berechnen, der verwendet werden kann, um einen Anstellwinkel für das Luftfahrzeug zu bestimmen, und das andere von den ersten erfassten Daten und den zweiten erfassten Daten zu verwenden, um einen zweidimensionalen Geschwindigkeitsvektor zu berechnen, der verwendet werden kann, um einen Schiebewinkel für das Luftfahrzeug zu bestimmen, wobei einer von dem ersten Emitter und dem zweiten Emitter in einer Ebene positioniert ist, die durch die Achse (Achse u), die sich entlang des Rumpfs des Luftfahrzeugs (30) und durch die Nase des Luftfahrzeugs erstreckt, und eine Achse (Achse v), die sich nach außen durch eine Seite des Luftfahrzeugs erstreckt, definiert ist, wobei die Achse (Achse u), die sich entlang des Rumpfs des Luftfahrzeugs und durch die Nase des Luftfahrzeugs erstreckt, und die Achse (Achse v), die sich nach außen durch eine Seite des Luftfahrzeugs erstreckt, orthogonal zueinander sind, und der andere von dem ersten und dem zweiten Emitter in einer Ebene positioniert ist, die durch die Achse (Achse u), die sich entlang des Rumpfes des Luftfahrzeugs und durch die Nase des Luftfahrzeugs erstreckt, und die Achse (Achse w), die sich durch den Boden des Luftfahrzeugs erstreckt, definiert ist, wobei die Achse (Achse u), die sich entlang des Rumpfes des Luftfahrzeugs und durch die Nase des Luftfahrzeugs erstreckt, und die Achse (Achse w), die sich durch den Boden des Luftfahrzeugs erstreckt, orthogonal zueinander sind.

4. System nach Anspruch 3, wobei das akustische Sensorsystem (10) ferner Folgendes umfasst:
einen ersten Satz von mindestens vier Mikrofonen, der dazu konfiguriert ist, die ersten akustischen Signale als erste erfasste Daten zu erfassen, und
einen zweiten Satz von mindestens vier Mikrofonen, der dazu konfiguriert ist, die zweiten akustischen Signale als zweite erfasste Daten zu erfassen, wobei
mindestens zwei der mindestens vier Mikrofone, die zum Erfassen der ersten akustischen Signale konfiguriert sind, entlang einer ersten Achse positioniert sind und mindestens zwei der mindestens vier Mikrofone, die zum Erfassen der ersten akustischen Signale konfiguriert sind, entlang einer zweiten Achse positioniert sind, die orthogonal zu der ersten Achse ist, und
mindestens zwei der mindestens vier Mikrofone, die zum Erfassen der zweiten akustischen Signale konfiguriert sind, entlang einer ersten Achse positioniert sind und mindestens zwei der mindestens vier Mikrofone, die zum Erfassen der ersten akustischen Signale konfiguriert sind, entlang einer zweiten Achse positioniert sind, die orthogonal zu der ersten Achse ist.

5. System nach Anspruch 3 oder Anspruch 4, wobei die Akustikverarbeitungseinheit (16, 46) dazu konfiguriert ist, einen oder mehrere von einem Schiebewinkel, einem Anstellwinkel, einer Fluggeschwindigkeit und einer Lufttemperatur für das Luftfahrzeug basierend auf den ersten und den zweiten erfassten Daten zu berechnen.

6. System nach einem der vorhergehenden Ansprüche, wobei jede der ersten Luftfahrzeugluftdatenparameterausgaben, der zweiten Luftfahrzeugluftdatenparameterausgaben und der dritten Luftfahrzeugluftdatenparameterausgaben einen gleichen Satz von Luftdatenparametern umfasst.

7. System nach einem der Ansprüche 1 bis 6, wobei:
die erste MFP (32a) an einer ersten Seite des Luftfahrzeugs (30) positioniert ist;
die zweite MFP (32b) an einer zweiten Seite des Luftfahrzeugs gegenüber der ersten Seite positioniert ist;
der erste Elektronikkanal (36) der ersten MFP dazu konfiguriert ist, statische Druckdaten zu empfangen, die von dem ersten Elektronikkanal (40) der zweiten MFP empfangen werden; und
der zweite Elektronikkanal der zweiten MFP (38) dazu konfiguriert ist, statische Druckdaten zu empfangen, die von dem zweiten Elektronikkanal (42) der ersten MFP empfangen werden.

8. System nach einem der Ansprüche 1 bis 7, ferner Folgendes umfassend:
einen Gesamtlufttemperatursensor (34), der elektrisch mit jedem von dem ersten Elektronikkanal (36) der ersten MFP (32a) und dem zweiten Elektronikkanal (40) der zweiten MFP (38) gekoppelt ist, um Gesamtlufttemperaturmessdaten für jeden von dem ersten Elektronikkanal der ersten MFP und dem zweiten Elektronikkanal der zweiten MFP bereitzustellen.

9. Verfahren, Folgendes umfassend:
Erzeugen erster Luftfahrzeugluftdatenparameterausgaben von einem ersten Elektronikkanal (36) einer ersten Multifunktionssonde (MFP) basierend auf dem Druck einer Luftströmung um ein Äußeres eines Luftfahrzeugs (30), der durch die erste MFP (32a) erfasst wird, und entsprechenden statischen Druckdaten, die einem statischen Druck der Luftströmung um das Äußere des Luftfahrzeugs entsprechen, der von einem ersten Elektronikkanal (40) einer zweiten MFP (32b) empfangen wird;
Erzeugen von zweiten Luftfahrzeugluftdatenparameterausgaben von einem zweiten Elektronikkanal (42) der zweiten MFP basierend auf dem Druck der Luftströmung um ein Äußeres des Luftfahrzeugs, der durch die zweite MFP erfasst wird, und statischen Druckdaten, die dem statischen Druck einer Luftströmung um das Äußere des Luftfahrzeugs entsprechen, der von einem zweiten Elektronikkanal (38) der ersten MFP empfangen wird; und
Erzeugen dritter Luftfahrzeugluftdatenparameterausgaben von einem akustischen Sensorsystem basierend auf beobachteten akustischen Signalen, die von dem akustischen Sensorsystem in eine Luftströmung um das Äußere des Luftfahrzeugs emittiert und durch mindestens zwei Mikrofone (12a-12d) erfasst werden, die an dem Äußeren des Luftfahrzeugs in einer Ebene, die durch eine Achse u und eine Achse v definiert ist, oder in einer Ebene positioniert sind, die durch die Achse u und eine Achse w definiert ist, wobei sich die Achse u entlang eines Rumpfs des Luftfahrzeugs und durch die Nase des Luftfahrzeugs erstreckt, sich die Achse v nach außen durch eine Seite des Luftfahrzeugs erstreckt und sich die Achse w durch den Boden des Luftfahrzeugs erstreckt, sodass die Achsen u, v und w einen dreidimensionalen Raum definieren, sowie auf einem dritten Druck einer Luftströmung um ein Äußeres des Luftfahrzeugs, der durch einen ersten und einen zweiten Anschluss (14a, 14b) für statischen Druck erfasst wird; und
Bereitstellen der ersten Luftfahrzeugluftdatenparameterausgaben, der zweiten Luftfahrzeugluftdatenparameterausgaben und der dritten Luftfahrzeugluftdatenparameterausgaben für mindestens ein Verbrauchssystem, wobei das mindestens eine Verbrauchssystem einen Fehlerzustand von einem oder mehreren der ersten MFP, der zweite MFP und des akustischen Sensors basierend auf einem Vergleich der ersten Luftfahrzeugluftdatenparameterausgaben,
der zweiten Luftfahrzeugluftdatenparameterausgaben und der dritten Luftfahrzeugluftdatenparameterausgaben bestimmt und das mindestens eine Verbrauchssystem ein Abstimmungsschema verwendet, um eine oder mehrere der ersten Luftfahrzeugluftdatenparameterausgaben, der zweiten Luftfahrzeugluftdatenparameterausgaben und der dritten Luftfahrzeugdatenparameterausgaben zur aktiven Verwendung durch das mindestens eine Verbrauchssystem auszuwählen, wobei das mindestens eine Verbrauchssystem eines oder mehrere der ersten Luftdatenparameterausgaben, der zweiten Luftdatenparameterausgaben und der dritten Luftdatenparameterausgaben für mindestens ein Ersatzinstrument oder eine Ersatzkomponente bereitstellt, das/die im Falle eines Fehlerzustands oder eines verschlechterten Betriebs eines bestimmten primären Instruments oder einer bestimmten primären Komponente verwendet wird.

## Revendications

1. Système pour aéronef, le système comprenant :
un aéronef (30) ;
une première sonde multifonction (MFP) configurée pour détecter au moins une première pression d'un flux d'air autour d'un extérieur de l'aéronef, la première MFP (32a) ayant un premier canal électronique (36) et un second canal électronique (38) ;
une seconde MFP (32b) configurée pour détecter au moins une deuxième pression d'un flux d'air autour de l'extérieur de l'aéronef, la seconde MFP ayant un premier canal électronique (40) et un second canal électronique (42), le premier canal électronique de la seconde MFP couplée électriquement au premier canal électronique de la première MFP pour former un premier système de données aérodynamiques fournissant des premières sorties de paramètres de données aérodynamiques d'aéronef, le second canal électronique de la seconde MFP étant couplé électriquement au second canal électronique de la première MFP pour former un deuxième système de données aérodynamiques fournissant des deuxièmes sorties de paramètres de données aérodynamiques d'aéronef ;
un système de capteur acoustique (10) qui comprend un premier émetteur (18) configuré pour émettre des premiers signaux acoustiques dans le flux d'air autour de l'extérieur de l'aéronef et au moins deux microphones (20a-20d) qui sont configurés pour détecter les premiers signaux acoustiques en tant que premières données captées et sont positionnés à l'extérieur de l'aéronef dans un plan défini par un axe u et un axe v ou dans un plan défini par l'axe u et un axe w, dans lequel l'axe u s'étend le long d'un corps de l'aéronef et à travers le nez de l'aéronef, l'axe v s'étend à travers un côté de l'aéronef, et l'axe w s'étend à travers le bas de l'aéronef de sorte que les axes u, v et w définissent un espace tridimensionnel ;
le système de capteur acoustique comprenant en outre des premier et second orifices de pression statique (14a, 14b) configurés pour détecter une troisième pression d'un flux d'air autour d'un extérieur de l'aéronef,
le système comprenant en outre une unité de traitement acoustique (16, 46) configurée pour recevoir les données détectées provenant du système de capteur acoustique pour former un troisième système de données aérodynamiques et générer des troisièmes sorties de paramètres de données aérodynamiques sur la base des données détectées provenant du système de capteur acoustique ; et
au moins un système consommateur (44), dans lequel l'au moins un système consommateur est configuré pour recevoir les premières sorties de paramètres de données aérodynamiques, les deuxièmes sorties de paramètres de données aérodynamiques et les troisièmes sorties de paramètres de données aérodynamiques et l'au moins un système consommateur est en outre configuré pour identifier une condition de défaillance dans un ou plusieurs parmi le premier système de données aérodynamiques, le deuxième système de données aérodynamiques et le troisième système de données aérodynamiques sur la base d'une comparaison des premières sorties de paramètres de données aérodynamiques, des deuxièmes sorties de paramètres de données aérodynamiques et des troisièmes systèmes de données aérodynamiques et pour utiliser chacune parmi les premières sorties de paramètres de données aérodynamiques, les deuxièmes sorties de paramètres de données aérodynamiques et les troisièmes sorties de paramètres de données aérodynamiques dans un schéma de vote pour sélectionner une ou plusieurs parmi les premières sorties de paramètres de données aérodynamiques, les deuxièmes paramètres de données aérodynamiques sorties et les troisièmes sorties de paramètre de données aérodynamiques pour une utilisation active par l'au moins un système consommateur et l'au moins un système consommateur est en outre configuré pour fournir une ou plusieurs parmi les premières sorties de paramètres de données aérodynamiques, les deuxièmes sorties de paramètres de données aérodynamiques et les troisièmes sorties de paramètres de données aérodynamiques à au moins un instrument ou composant de secours qui est utilisé en cas de condition de défaillance ou de fonctionnement dégradé d'un instrument ou composant principal désigné.

2. Système selon la revendication 1, dans lequel les premières données détectées sont fournies au premier système de données aérodynamiques et au deuxième système de données aérodynamiques pour compléter les premières sorties de paramètres de données aérodynamiques d'aéronef et les deuxièmes sorties de paramètres de données aérodynamiques d'aéronef.

3. Système selon la revendication 1 ou la revendication 2, dans lequel le système de capteur acoustique (10) comprend en outre un second émetteur configuré pour émettre des seconds signaux acoustiques dans le flux d'air autour de l'extérieur de l'aéronef et est configuré pour détecter les seconds signaux acoustiques en tant que secondes données détectées, dans lequel le premier émetteur et le second émetteur sont positionnés dans des plans géométriques différents de sorte que le système de capteur acoustique est configuré pour utiliser l'une parmi les premières données détectées et les secondes données détectées pour calculer un vecteur de vitesse bidimensionnel qui peut être utilisé pour déterminer un angle d'attaque pour l'aéronef et utiliser l'autre parmi les premières données détectées et les secondes données détectées pour calculer un vecteur de vitesse bidimensionnel qui peut être utilisé pour déterminer un angle de dérapage pour l'aéronef, dans lequel l'un parmi le premier émetteur et le second émetteur est positionné dans un plan défini par l'axe (axe u) s'étendant le long du corps de l'aéronef (30) et passant à travers le nez de l'aéronef et un axe (axe v) s'étendant à travers un côté de l'aéronef, dans lequel l'axe (axe u) s'étendant le long du corps de l'aéronef et à travers le nez de l'aéronef et l'axe (axe v) s'étendant à travers un côté de l'aéronef sont orthogonaux l'un par rapport à l'autre, et l'autre des premier et second émetteurs est positionné dans un plan défini par l'axe (axe u) s'étendant le long du corps de l'aéronef et à travers le nez de l'aéronef et l'axe (axe w) s'étendant à travers le fond de l'aéronef, dans lequel l'axe (axe u) s'étendant le long du corps de l'aéronef et à travers le nez de l'aéronef et l'axe (axe w) s'étendant à travers le fond de l'aéronef sont orthogonaux l'un par rapport à l'autre.

4. Système selon la revendication 3, dans lequel le système de capteur acoustique (10) comprend en outre :
un premier ensemble d'au moins quatre microphones configurés pour détecter les premiers signaux acoustiques en tant que premières données détectées, et
un second ensemble d'au moins quatre microphones configurés pour détecter les seconds signaux acoustiques en tant que secondes données détectées, dans lequel
au moins deux des au moins quatre microphones configurés pour détecter les premiers signaux acoustiques sont positionnés le long d'un premier axe et au moins deux des au moins quatre microphones configurés pour détecter les premiers signaux acoustiques sont positionnés le long d'un second axe orthogonal au premier axe et
au moins deux des au moins quatre microphones configurés pour détecter les seconds signaux acoustiques sont positionnés le long d'un premier axe et au moins deux des au moins quatre microphones configurés pour détecter les premiers signaux acoustiques sont positionnés le long d'un second axe orthogonal au premier axe.

5. Système selon la revendication 3 ou la revendication 4, dans lequel l'unité de traitement acoustique (16, 46) est configurée pour calculer un ou plusieurs parmi un angle de dérapage, un angle d'attaque, une vitesse de l'air et une température de l'air pour l'aéronef sur la base des premières et secondes données détectées.

6. Système selon une quelconque revendication précédente, dans lequel chacune parmi les premières sorties de paramètres de données aérodynamiques d'aéronef, les deuxièmes sorties de paramètres de données aérodynamiques d'aéronef et les troisièmes sorties de paramètres de données aérodynamiques d'aéronef comprend un même ensemble de paramètres de données aérodynamiques.

7. Système selon l'une quelconque des revendications 1 à 6, dans lequel :
la première MFP (32a) est positionnée sur un premier côté de l'aéronef (30) ;
la seconde MFP (32b) est positionnée sur un second côté de l'aéronef opposé au premier côté ;
le premier canal électronique (36) de la première MFP est configuré pour recevoir des données de pression statique reçues du premier canal électronique (40) de la seconde MFP ; et
le second canal électronique de la seconde MFP (38) est configuré pour recevoir des données de pression statique reçues du second canal électronique (42) de la première MFP.

8. Système selon l'une quelconque des revendications 1 à 7, comprenant en outre :
un capteur de température totale de l'air (34) couplé électriquement à chacun parmi le premier canal électronique (36) de la première MFP (32a) et le second canal électronique (40) de la seconde MFP (38) pour fournir des données de mesure de la température totale de l'air à chacun parmi le premier canal électroniques de la première MFP et le second canal électronique de la seconde MFP.

9. Procédé, comprenant :
la génération de premières sorties de paramètres de données aérodynamiques d'aéronef à partir d'un premier canal électronique (36) d'une première sonde multifonction (MFP) sur la base d'une pression d'un flux d'air autour d'un extérieur d'aéronef (30) détectée par la première MFP (32a) et de données de pression statique correspondant à la pression statique du flux d'air autour de l'extérieur de l'aéronef reçues d'un premier canal électronique (40) d'une seconde MFP (32b) ;
la génération de deuxièmes sorties de paramètres de données d'air d'aéronef à partir d'un second canal électronique (42) de la seconde MFP sur la base d'une pression du flux d'air autour de l'extérieur de l'aéronef détectée par la seconde MFP et de données de pression statique correspondant à une pression statique d'un flux d'air autour de l'extérieur de l'aéronef reçues d'un second canal électronique (38) de la première MFP ; et
la génération de troisièmes sorties de paramètres de données aérodynamiques d'aéronef à partir d'un système de capteur acoustique sur la base de signaux acoustiques observés émis par le système de capteur acoustique dans un flux d'air autour de l'extérieur de l'aéronef et détectés par au moins deux microphones (12a-12d) qui sont positionnés à l'extérieur de l'aéronef dans un plan défini par un axe u et un axe v ou dans un plan défini par l'axe u et un axe w, dans lequel l'axe u s'étend le long d'un corps de l'aéronef et à travers le nez de l'aéronef, l'axe v s'étend à travers un côté de l'aéronef, et l'axe w s'étend à travers le fond de l'aéronef de sorte que les axes u, v et w définissent un espace tridimensionnel, ainsi que sur une troisième pression d'un flux d'air autour d'un extérieur de l'aéronef détectée par des premier et second orifices de pression statique (14a, 14b) ; et
la fourniture des premières sorties de paramètres de données aérodynamiques d'aéronef, des deuxièmes sorties de paramètres de données aérodynamiques d'aéronef et des troisièmes sorties de paramètres de données aérodynamiques d'aéronef à au moins un système consommateur, dans lequel l'au moins un système consommateur détermine une condition de défaillance d'un ou plusieurs parmi la première MFP, la seconde MFP et le capteur acoustique sur la base d'une comparaison des premières sorties de paramètres de données aérodynamiques d'aéronef, des deuxièmes sorties de paramètres de données aérodynamiques d'aéronef et des troisièmes sorties de paramètres de données aérodynamiques d'aéronef et l'au moins un système consommateur utilise un schéma de vote pour sélectionner une ou plusieurs parmi les premières sorties de paramètres de données aérodynamiques d'aéronef, les deuxièmes sorties de paramètres de données aérodynamiques d'aéronef et les troisièmes sorties de paramètres de données aérodynamiques d'aéronef pour une utilisation active par l'au moins un système consommateur, dans lequel l'au moins un système consommateur fournit une ou plusieurs parmi les premières sorties de paramètres de données aérodynamiques, les deuxièmes sorties de paramètres de données aérodynamiques et les troisièmes sorties de paramètres de données aérodynamiques à au moins un instrument ou composant de secours qui est utilisé en cas de condition de défaillance ou de fonctionnement dégradé d'un instrument ou composant principal désigné.
